(19) Europäisches Patentamt
European Patent Office
Office européen des brevets

(11) **EP 2 219 035 A1**

(12) **EUROPEAN PATENT APPLICATION**

(43) Date of publication:
**18.08.2010 Bulletin 2010/33**

(51) Int Cl.:
**G01Q 30/06** *(2010.01)*    **G01Q 60/36** *(2010.01)*

(21) Application number: **09305150.6**

(22) Date of filing: **16.02.2009**

(84) Designated Contracting States:
**AT BE BG CH CY CZ DE DK EE ES FI FR GB GR HR HU IE IS IT LI LT LU LV MC MK MT NL NO PL PT RO SE SI SK TR**
Designated Extension States:
**AL BA RS**

(71) Applicants:
• **Institut Curie**
**75005 Paris (FR)**
• **Centre National de la Recherche Scientifique**
**75016 Paris (FR)**

(72) Inventors:
• **Scheuring, Simon**
**75018, PARIS (FR)**
• **Casuso, Ignacio**
**75003, PARIS (FR)**

(74) Representative: **Pontet, Bernard**
**PONTET ALLANO & Associés**
**6, Avenue du Général De Gaulle**
**78000 Versailles (FR)**

(54) **Method for automatic adjustment of the applied force and control of the force drift in an Atomic Force Microscope during contact mode imaging.**

(57) The present invention relates to a method, apparatus and computer program for automatically compensating a drift of a force applied by an Atomic Force Microscope during contact mode. The method makes it possible to automatically control and correct force drift in contact mode Atomic Force Microscopy. In a preferred embodiment, the invention comprises steps measuring independently lateral and vertical vibration signals, analyzing theses signals and finally comparing theses signals to reference vibration signals. In a second embodiment, the vibration signals may be combined by means of an index, called force index.

FIG. 7

EP 2 219 035 A1

**Description**

The present invention relates to the field of contact mode Atomic Force Microscopy, especially to automatically adjusting and controlling the force applied by an Atomic Force Microscope tip during contact mode imaging.

Over the last years the Atomic Force Microscopy has become a powerful tool for the structural characterization of biological samples. The AFM uses a sharp tip placed at the end of a cantilever to scan a sample, and where the motion of the cantilever is used to monitor the force applied on the sample. The AFM maintains the cantilever signal constant to a prefixed setpoint value, for this a feedback loop is used to process the cantilever signal which controls the distance between tip and sample using a piezoelectric stage. In most, but not all, AFM systems the read out of the cantilever motion is performed using the reflection of a laser beam on the backside of the cantilever onto a multiple-quadrant photodiode.

An inherent problem of AFM systems is to control the force applied by the AFM tip, and the force drift, which is caused by non-controllable physical phenomena like dilatation, surface tension variations, laser fluctuations, temperature drift or electrical charging. It is impossible to eliminate drift from AFM systems. Therefore, the drift must be analyzed and compensated during AFM operation. Nowadays, the only way to correct the drift during contact mode imaging is to permanently observe the evolution of the AFM imaging and to manually modify the setpoint of the feedback system based on the operator's experience.

It is an object of the present invention to provide a method to automatically analyse the force applied by the AFM tip during contact mode imaging.

It is an object of the present invention to provide a method for the automatic adjustment and continuous control of the force applied by the atomic force microscope tip during contact mode imaging.

It is an object of the present invention to provide a method to automatically find the force applied to the AFM tip during contact mode imaging for optimal image acquisition.

It is an object of the present invention to provide a method to automatically perform drift compensation of the loading force applied to the AFM tip during contact mode imaging.

It is yet another object of the present invention to provide a method to optimize the resolution in the Contact Mode Imaging

The invention is disclosed as recited in the appended claims.

Such objects are accomplished through a method for automatically adjusting and compensating for the drift of the force applied by an Atomic Force Microscope during contact mode scanning, said Atomic Force Microscope comprising a probe scanning a surface of a sample, said method comprising at least one occurrence of the following steps:

- scanning the surface of said sample for a predetermined number of scan lines at a given frequency,
- measuring lateral and/or vertical vibration signal(s) of said probe while scanning, and
- correcting said applied force according to said vertical and/or lateral vibration signal(s) and reference vertical and/or reference lateral vibration signal(s) previously defined or measured.

Indeed, the inventors of the present invention have found the following results:

- when the loading force applied to the AFM tip is insufficient for high resolution imaging on a biological object the vertical vibration of the cantilever is increased compared to ideal imaging conditions,
- when the loading force applied to the AFM tip increases the vertical vibration of the cantilever decreases,
- when the loading force applied to the AFM tip is excessive for high resolution imaging on a biological object the lateral vibration of the cantilever is increased compared to ideal imaging conditions, and
- when the loading force applied to the AFM tip decreases the lateral vibration of the cantilever decreases.

By using the vertical and lateral cantilever vibration, it is possible to analyze the actual applied force during contact mode AFM imaging. This allows an atomic force microscope to find and correct the setpoint automatically.

Indeed personal experience is not necessary with the method according to the present invention to correct the applied force between the tip of the probe and the surface of the scanned sample.

Moreover, the present invention makes it possible to avoid to remain in front of the AFM screen during the image acquisition and continuously interact with the AFM.

The method according to the present invention may also comprise one or more filtering step(s) of the lateral and/or vertical vibration signal(s) in order to eliminate force-unrelated signals due to surface features of said scanned surface, for example spikes due to sharp surface features or discontinuities. Indeed, scan lines that comprise sharp topographic features show strong increase in the vibration signals. Steep topographic changes cannot perfectly be followed by the feedback loop and therefore excessive cantilever deflection occurs, resulting in an overestimation of the vibrational signal. These signal spikes are identified by their large deviation from the mean of the majority of recorded vibrations signals.

The measuring step may comprise a step of measuring lateral and/or vertical vibration signal(s) for every scanning position on each scan line.

Preferably, the scanning step may comprise a scanning cycle for each scan line, said scanning cycle comprising a first step of scanning said scan line in one direction and a second step of scanning said scan line in the opposite direction, the lateral and/or vertical vibration signal(s) being measured during the first and the second scanning steps for each scanning position of the scan line. For each type of vibration signal, i.e. lateral vibration and vertical vibration, combining two different vibration values measured in both scan directions respectively, said trace and retrace scan lines, makes it possible to reduce noise and obtain more representative data about probe vibration and therefore about setpoint drift.

Before the correcting step, the method according to the invention may comprise a step calculating independently lateral and/or vertical vibration standard deviation signal(s) for each scan line or fraction of a scan line. In case of trace and retrace vibration signals are measured said calculating step may comprise a selection of the minimum or average of lateral and/or vertical vibration standard deviation signal as lateral and/or vertical deviation value(s) for said position. The calculating step issues a lateral vibration standard deviation signal (512) and/or a vertical vibration standard deviation signal (510) for each scan line.

This step of calculating independently lateral and/or vertical vibration standard deviation signal(s) may be performed every a predetermined number of scan lines. This feature of the present invention makes it possible to correct force drift every a predetermined number of scan lines. Indeed, in some cases performing force drift compensation every scan line may be senseless and users may need the possibility to make such a correction every 5, 10 or 20 scan lines while taking into account the standard deviation on every scan line.

In a first embodiment, which is a preferred embodiment of the invention, the correcting step may comprise the following operations:

- comparing the measured vertical vibration standard deviation signal to the reference vertical vibration standard deviation signal, and
- comparing the measured lateral vibration standard deviation signal to the reference lateral vibration standard deviation signal;

the correction of the applied force being determined by an algorithm based on said comparisons.

In this preferred embodiment, the correction of the applied force may be determined by the following algorithm:

- if the vertical vibration standard deviation signal is larger than the reference vertical vibration standard deviation signal, and the measured lateral vibration standard deviation signal is smaller than the reference vertical vibration standard deviation signal, then the correction is an increase of the applied force, and the measured lateral vibration standard deviation signal is stored as the new reference lateral vibration standard signal. The increase may be either a prefixed value, e.g. 0.001V - 0.1V, or a value that is determined by analyzing the decrease of vertical vibration signal as a function of the cantilever deflection in a force curve;
- if the measured vertical vibration standard deviation signal is smaller than the reference vertical vibration standard deviation signal, and the measured lateral vibration standard deviation signal is greater than the reference vertical vibration standard deviation signal, then the correction is a decrease of the applied force, and the measured vertical vibration standard deviation signal is stored as the new reference vertical vibration standard deviation signal. The decrease may be either a prefixed value, e.g. 0.001V - 0.1V, or a value that is determined by analyzing the decrease of vertical vibration signal as a function of the cantilever deflection in a force curve;
- if the measured vertical vibration standard deviation signal is smaller than the reference vertical vibration standard deviation signal, and the measured lateral vibration standard deviation signal is smaller than the reference vertical vibration standard deviation signal, then no correction of the applied force is made, and the measured vertical vibration standard deviation signal is stored as the new reference vertical vibration standard signal and the measured lateral vibration standard deviation signal is stored as the new reference lateral vibration standard deviation signal; and
- if the measured vertical vibration standard deviation signal is greater than the reference vertical vibration standard deviation signal, and the measured lateral vibration standard deviation signal is greater than the reference vertical vibration standard deviation signal, then the correction is a decrease of the applied force. Again, the decrease may be either a prefixed value, e.g. 0.001V - 0.1V; or a value that is determined by analyzing the decrease of vertical vibration signal as a function of the cantilever deflection in a force curve.

In this preferred embodiment, the invention makes it possible to automatically find and maintain the optimal applied force during contact mode imaging based on the analysis of the vertical and the lateral cantilever vibration signals.

In a second embodiment, the correcting step may comprise the following steps:

- calculating an index, called force index, according to the vertical and/or lateral deviation signal(s), and
- comparing said force index ($FI_i$) to a reference force index ($FI_R$).

the correction of the applied force being determined by an algorithm based on said comparison.

The reference force index may either be calculated according to the reference lateral and/or deviation signal (s) or defined at a moment when optimal imaging conditions were manually achieved.

Such a force index may be calculated by subtracting the standard deviation of the vertical cantilever vibration from the standard deviation of the lateral cantilever vibration. For example:

$$FI = x\sigma_{lat} - y\sigma_{vert} \text{ with x and y real numbers.}$$

With $\sigma_{lat}$ the average standard deviation of the lateral cantilever vibration (for each scanning position) determined over a predetermined number of scan lines or a fraction of a scan line), and $\sigma_{vert}$ the average standard deviation of the vertical cantilever vibration for each scanning position determined over a predetermined number of scan lines or a fraction of a scan line and FI the force index.

The correction of the applied force may be determined by an algorithm based on the difference between the calculated force index ($FI_i$) and the reference force index ($FI_R$).

Such an algorithm may comprise a relation such as:

$$if \ \Delta FI > x \ then \ \Delta setpoint = A.\Delta FI$$

$$if \ \Delta FI < y \ then \ \Delta setpoint = B.\Delta FI$$

with $\Delta FI = FI_R - FI_i$, A and B any real positive numbers, x and y real positive or negative numbers, $FI_R$ the reference Force Index and $FI_i$ the measured force index. A and B, such as x and y, can be chosen by the user. This relation regulates the speed of the setpoint correction for the situations when the applied force is too high, $\Delta FI > x$ or too low $\Delta FI < y$. The user could set x=y=0 and $A = B$ in case that equal reactions towards higher and lower forces are wished. In case that the sample is particularly fragile, the user might set A>B.

The method according to the invention may comprise a starting phase where a reference vertical vibration signal and/or a reference lateral vibration signal is/are determined at the very beginning of the scanning process. The starting phase may also comprise the calculation of the standard deviation for these reference vibration signals.

In the second embodiment described above, a first reference force index may be defined in this starting phase.

As indicated, the predetermined number of scan lines may be 5 or many or a fraction of 1 and the predetermined scanning frequency ay be between 1 and 10, for example 5Hz

The invention also provides a computer program comprising instructions for carrying out the steps of such a method according to the invention.

The invention also provides a computer readable medium, for example a CR-ROM, a USB key, a flash drive, a USB flash drive, comprising such a computer program according to the invention.

The invention also provides an apparatus comprising means adapted for carrying out the steps of the method according to the invention.

The invention also provides an atomic force microscope comprising a computer program and/or an apparatus according to the invention.

Contact mode is between five and ten times faster than other conventional imaging modes. Additionally, it has provided the so far highest resolution images. These features make contact mode the most appropriate mode for the imaging of nanometric biological samples.

The presented automatic force adjustment and drift compensation invention for contact mode AFM allows the user to let the microscope function like an imaging robot for long experiments.

It is estimated that this invention will be of high value for time-lapse imaging studies. Furthermore, often in high-resolution AFM experiments, imaging resolution increases with experiment duration due to system equilibration. Importantly, the vibration analysis is interference independent: often laser interference in the optical path result in wavy force distance curves in the non-contact region. While these fluctuations are documented by the photo-detector as force variations, interference problems have no influence on the vibration noise of the cantilever. The invention allows also an individual experimenter to manipulate the experimental conditions in the fluid chamber during the experiment, while the AFM maintains optimal force independently. Finally, the invention will be applicable by a large number of less-experienced AFM users and will therefore contribute to bringing the AFM towards a more general use in biology laboratories.

The new and inventive features believed characteristics of the invention are set forth in the appended claims. The invention itself, however, as well as a preferred mode of use, further objects and advantages thereof, will best be understood by reference to the following detailed description of an illustrative detailed embodiment when read in conjunction with the accompanying drawings, wherein:

- figure 1 schematically illustrates an example of an atomic force microscope;
- figure 2 schematically illustrates the steps of an example of a method according to preferred embodiment of the invention;
- figure 3 illustrates an example of a decision making matrix used in a preferred embodiment of the invention illustrated en figure 2;
- figure 4 illustrates the evolution of the correction of the applied force in the preferred embodiment illustrated on figure 2 following the decision taking matrix illustrated in figure 3;
- figure 5 schematically illustrates the steps of an example of a method according to a second embodiment of the invention;
- figure 6 illustrates signal treatment on deviation signals according to the present invention;
- figure 7 schematically illustrates an example of an apparatus according to the invention;
- figure 8 illustrates an example of setpoint correction according to the invention; and
- figure 9 schematically illustrates how the image quality depends on the force applied to the AFM tip and how the vertical and lateral vibration signals change depending on the applied force;

In the following specifications, elements common to several figures are referenced through a common identifier.

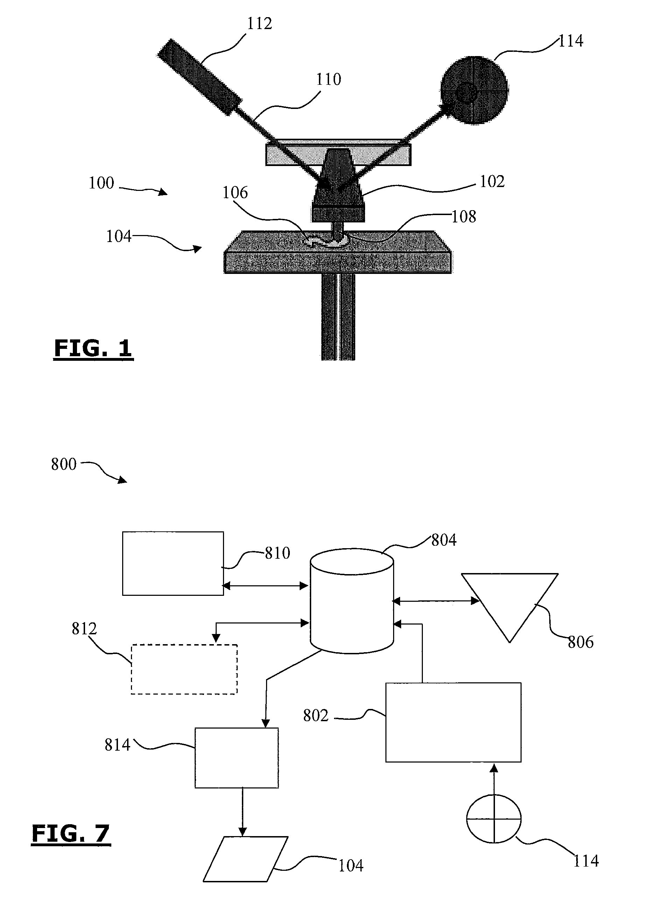

Figure 1 schematically illustrates an example of an atomic force microscope (AFM) 100. The AFM 100 comprises a sharp probe 102, a piezoelectric stage 104 to raster the probe 102 or the sample 106 to be scanned. The probe 102 is equipped with a sharp tip 108 placed at the end of said probe 102 also called cantilever. In contact mode microscopy, the tip 108 is in constant contact with the scanned sample 106.

The AFM 100 also comprises means to detect the deviation of the probe. These means generally comprise a laser beam 110 emitted by a laser generator 112 directed towards the probe 102, a photo-detector or multiple-quadrant photodiode 114 to monitor probe deflection and measure the force applied to the sample 106. The read out of the cantilever motion is performed using the reflection of the laser beam 110 on the backside of the cantilever 102 onto the multiple-quadrant photodiode 114.

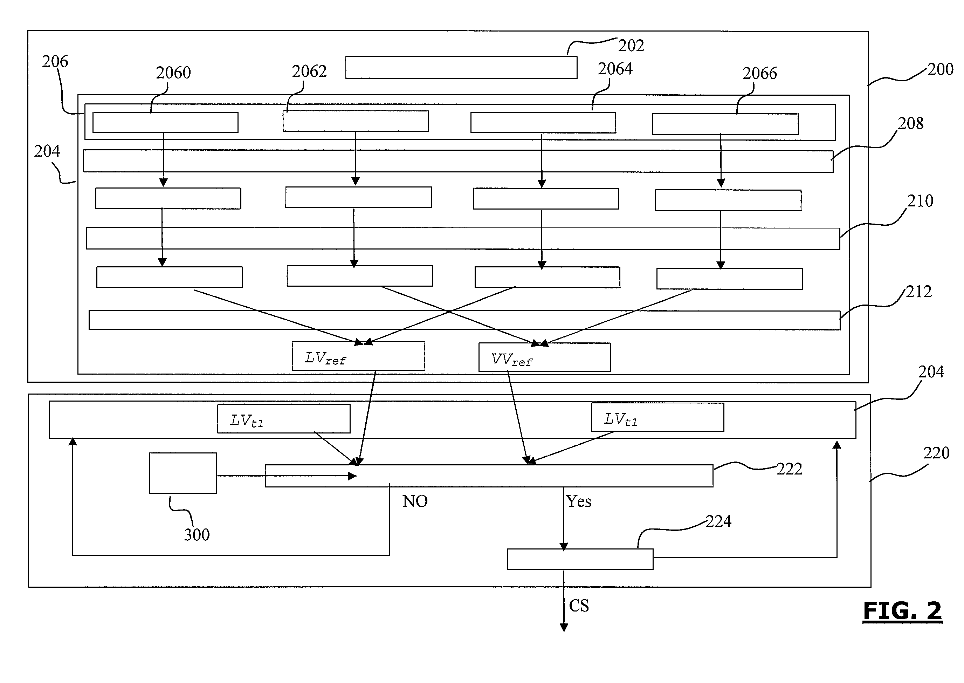

Figure 2 schematically illustrates the steps of an example of a method according to a first embodiment 200 of the invention which is the preferred embodiment of the invention.

The preferred embodiment illustrated on figure 2, comprises a first phase 200 called "starting phase" and a second phased 220 called "drift compensation phase".

**At time t0**

The AFM starts scanning, in contact mode, at step 202.

Then step 204 is realized. Step 204 comprises steps 206 to 212, which now will be described,

At step 206 the AFM scans next scan line according to one direction. Two vibration signals are independently measured and stored: one for trace lateral vibration 2060 and one for trace vertical vibration 2062.

At the same step the AFM scans the same scan line, in the opposite direction. Once again two vibration signals are independently measured and stored: one for retrace lateral vibration 2064 and one for retrace vertical vibration 2066.

At step 208, every vibration signal measured in steps 206 is filtered with a filter. This step removes the vibration spikes caused for example by sharp topography features.

For filtering the vertical and lateral vibration signals in order to remove spikes (due to sharp topography features) several types of filters can be applied. Here are presented two possible filtering procedures:

■ Standard deviation filter: Of all (vertical or lateral) vibration values the average and the standard deviation are calculated. All values above a certain threshold (for example 3.29 times the standard deviation) from the average are removed. This procedure removes vibration spikes, and subsequently a force-dependent standard deviation value is calculated.

■ "Uphill" filter: All (vertical or lateral) vibration values that correspond to regions in the scan where the tip moves upwards are removed. This procedure removes vibration spikes due to feedback speed limitations. Subsequently a force-dependent standard deviation value is calculated.

Once these points are removed, in each vibration signal, the standard deviation for each scan line is calculated at step 210. To do this, for each deviation type, i.e. lateral and vertical, trace and retrace deviation signals are analyzed and the standard deviation is chosen for each pixel or scanning position.

At step 212, for each scan line, an average lateral standard deviation signal and an average vertical standard deviation signal is calculated by averaging the aforementioned standard deviation signals. These signals are stored as reference signals: $LV_{ref}$, $VV_{ref}$.

### At time t1

The drift compensation phase 220 is realized.

The drift compensation phase 220 comprises the calculation of the average lateral and vertical deviations signals for each next predetermined number of scan lines. For this, the step 204-204 is realized again, in the same manner as at time t0, and a lateral standard deviation signal and a vertical standard deviation signal are obtained: $VV_{t1}$ and $LV_{t1}$

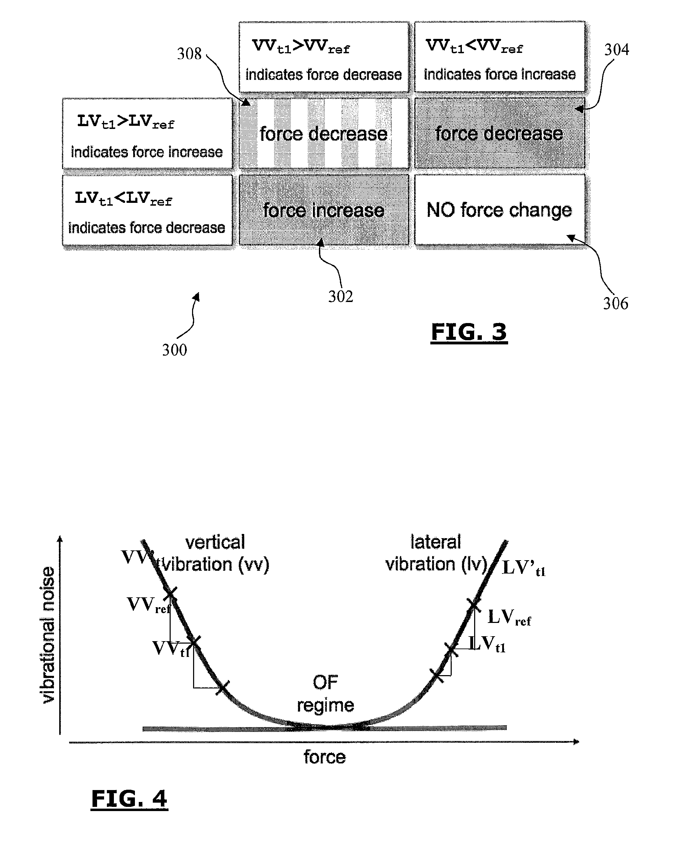

At step 222, the deviation signals $VV_{t1}$ and $LV_{t1}$, are compared to the reference deviation signals $VV_{ref}$ and $LV_{ref}$. This step determines if a correction is needed. The need for a correction is determined according to a decision making matrix 300 illustrated on figure 3.

In general the vertical deviation or vibration is sensitive at low forces, while the lateral deviation or vibration is sensitive when loading forces are increased in hard tip-sample contact. Increased level of vibration, both vertical and lateral, means also lower image quality. Logically, the image quality is best when least cantilever vibration noise is on the definition of the cantilever position.

This rational, represented in figure 3, is followed for allowing the automated AFM to find and maintain the optimal imaging forces:

- if the vertical deviation signal $VV_{t1}$ at time t1 is larger than the reference vertical deviation signal $VV_{ref}$, and the lateral deviation signal $LV_{t1}$ at time t1 is smaller than the reference vertical deviation signal $LV_{ref}$, then the correction is an increase of the applied force, and $LV_{t1}$ is set as the new reference lateral signal: $LV_{ref=} LV_{t1}$.
- if the vertical deviation signal $VV_{t1}$ at time t1 is smaller than the reference vertical deviation signal $VV_{ref}$, and the lateral deviation signal $LV_{t1}$ at time t1 is greater than the reference lateral deviation signal $LV_{ref}$, then the correction is a decrease of the applied force, and the vertical deviation signal $VV_{t1}$ is stored as the new reference vertical signal: $VV_{ref=} VV_{t1}$.
- if the vertical deviation signal $VV_{t1}$ at time t1 is smaller than the reference vertical deviation signal $VV_{ref}$, and the lateral deviation signal $LV_{t1}$ at time t1 is smaller than the reference lateral deviation signal $LV_{ref}$, then no correction of the applied force is made, and the vertical deviation signal $VV_{t1}$ at time t1 is stored as the new reference vertical signal and the lateral deviation signal $LV_{t1}$ at time t1 is stored as the new reference lateral signal: $LV_{ref=} LV_{t1}$, $VV_{ref}=VV_{t1}$; and
- if the vertical deviation signal $VV_{t1}$ at time t1 is greater than the reference vertical deviation signal $VV_{ref}$, and the lateral deviation signal $LV_{t1}$ at time t1 is greater than the reference lateral deviation signal $LV_{ref}$, then the correction is a decrease of the applied force.

As illustrated on figure 4, if the vertical deviation $VV_{t1}$ is smaller than $VV_{ref}$, the image noise decreased due to a slight increase of the applied force. Less image noise is considered as a good thing, and therefore $VV_{t1}$ is set as new $VV_{ref}$. In contrast, if the vertical deviation $VV'_{t1}$ is larger than $VV_{ref}$, the image noise has increased due to force drift to lower applied force. Then, the applied force is decreased to get the applied force back to the initial $VV_{ref}$.

Using this rational, the setpoint will solely through drift slowly go towards higher loading forces where the image noise is lesser. Using the above-outlined rational, the procedure will never push the tip to higher forces than a situation that was stable before, but the loading force must end up in a position where low image noise is assured. In order to prevent the system from going to extensive imaging forces that eventually destroy the sample, the same rationales are used for the lateral deviation signal.

If the lateral deviation $LV_{t1}$ is smaller than $LV_{ref}$, the image noise decreased due to a slight decrease of the applied force. Again, less image noise is considered as a good thing, and therefore $LV_{t1}$ is set as new $LV_{ref}$. In the contrary, if the lateral deviation $LV'_{t1}$ is larger than $LV_{ref}$, the image noise has increased but this time due to force drift to higher applied force. In this case the applied force is decreased to get the applied force back to the initial $LV_{ref}$. This procedure drives the AFM towards lower forces and lower noise.

The implementation of the described rationales has been performed with the decision taking matrix illustrated on figure 3. This allows the AFM to find, stabilize and drift compensate its setpoint at conditions where image noise and forces are minimal.

In the matrix 300, illustrated en figure 3, two major situations are considered: the two signals, i.e. the vertical and lateral deviations, agree in their analysis of the force drift, or the two signals disagree. In case the two signals agree, the automated setpoint will increase, case 302, or decrease, case 304, to compensate for drift. In case of disagreement, when the vertical deviation indicates force increase and the lateral deviation indicates force decrease, case 306, the AFM does not take any action. In case of disagreement, when the vertical deviation indicates force decrease but the lateral deviation indicates force increase, i.e. case 308, the force is decreased: force drift has often the tendency to drift towards higher loading forces, therefore giving the lateral deviation signal here the overweight is a security measure to tend towards minimal forces.

The above rational will allow the AFM to find and maintain automatically optimal imaging loading forces during contact mode imaging based on the analysis of the vertical and lateral cantilever deviation or deviation signals.

Back to figure 2, if no correction is needed, the new reference deviations are stored as indicated above, and the method goes back to step 204 of phase 220 and step 204 is realized for the next predetermined number of scan lines.

If a correction is needed, the new reference deviations are stored, the force drift is corrected at step 224 by a correcting signal CS. After correction the method goes back to step 204 of phase 220 and step 204 is realized for the next predetermined number of scan lines, preferably until the end of the scanning process.

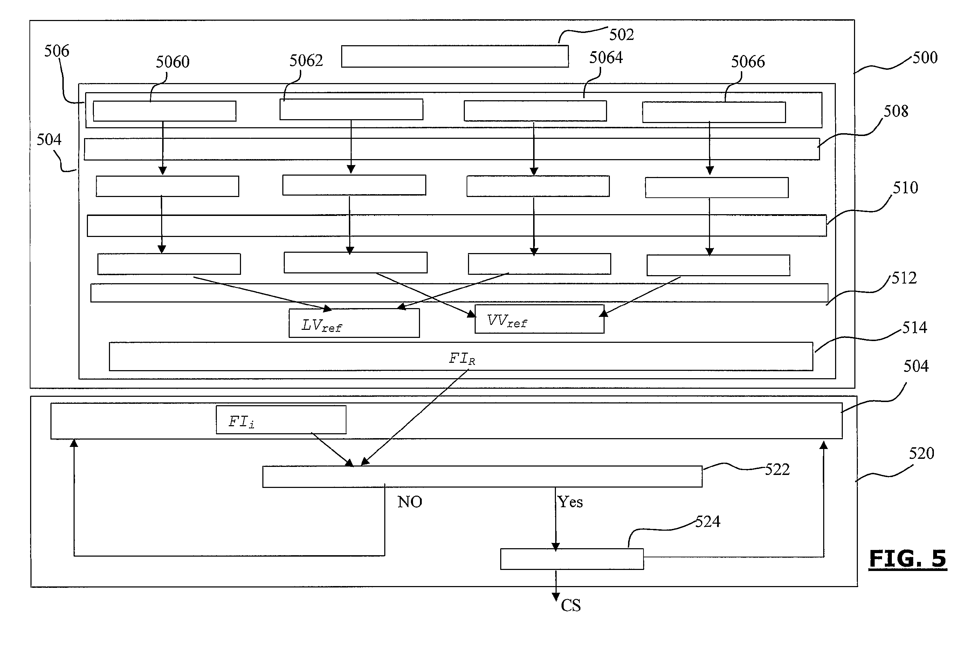

A second embodiment of the invention will now be described with respect to figure 5.

Figure 5 schematically illustrates the steps of an example of a method according to a second embodiment of the method according to the invention.

The second embodiment illustrated on figure 5, comprises a first phase 500 called "starting phase" and a second phased 520 called "drift compensation phase". The starting phase 500 comprises a first step 502 in which the AFM starts scanning, in contact mode, with an optimal applied force between the tip and the surface of the scanned sample: the AFM is scanning the sample in an optimal force regime (OF).

**At time t0,** in the very beginning of the scanning process, just after the AFM starts scanning at step 502, when the AFM is still in the OF, a force index is determined according to step 504 and stored as the reference force index $FI_R$. Step 504 is called "FI computation step", comprises steps 506 to 514.

At step 506, the AFM scans next scan line according to one direction. Two deviation signals are independently measured and stored: one for trace lateral vibration 5060 and one for trace vertical vibration 5062.

At same step the AFM scans the same scan line in the opposite direction. Once again two deviation signals are independently measured and stored: one for retrace lateral vibration 5064 and one for retrace vertical vibration 5066.

At step 508, every vibration signal is filtered to remove vibration spikes caused by sharp features of the sample.

Once these points are removed, in each vibration signal, the standard deviation for each scan line is calculated at step 510. To do this, for each deviation type, i.e. lateral and vertical, trace and retrace vibration signals are analyzed and the standard deviation is calculated for each scan line (or multiple or fraction of a scan line).

In step 512 the average lateral and vertical deviations is calculated for each scanning position by taking into account the standard lateral and vertical deviation signals for each scan line.

At step 514 the reference force index is calculated by using the formula:

$$FI_R = x\sigma_{lat} - x\sigma_{vert} \texttt{ with x and y real numbers.}$$

with $\sigma_{lat}$ the average lateral deviation, and $\sigma_{vert}$ the average vertical deviation and $FI_R$ the reference force index.

The reference force index $FI_R$ is stored in storage means. The scanning of the sample continues.

**At time t1,** the drift compensation phase 520 is realized.

The drift compensation phase 520 comprises the calculation of the force index for each next predetermined number of scan lines. For this, the step 504 is realized to determine the force index, in the same manner as the reference force index $FI_R$ was determined in the starting phase 500.

Then the force index $FI_i$, is compared to the reference force index $FI_R$ at step 522. The need for drift compensation and the speed of the correction is determined by the formula:

*if ΔFI>x then Δsetpoint=A.ΔFI*
*if ΔFI<y then Δsetpoint=B.ΔFI*

with $\Delta FI = FI_R - FI_i$, A and B any real positive numbers, x and y real positive or negative numbers. A and B, such as x and y, can be chosen by the user. This relation regulates the speed of the setpoint correction for the situations when the applied force is too high, $\Delta FI > x$ or too low $\Delta FI < y$. The user could set x=y=0 and $A = B$ in case that equal reactions towards higher and lower forces are wished.

If no correction if needed, the method goes back to step 504 of phase 520 and step 504 is realized for the next predetermined number of scan lines.

If a correction is needed, the force drift is corrected at step 524 by a correcting signal CS. After correction the method goes back to step 504 of phase 520 and step 504 is realized for the next predetermined number of scan lines, preferably until the end of the scanning process.

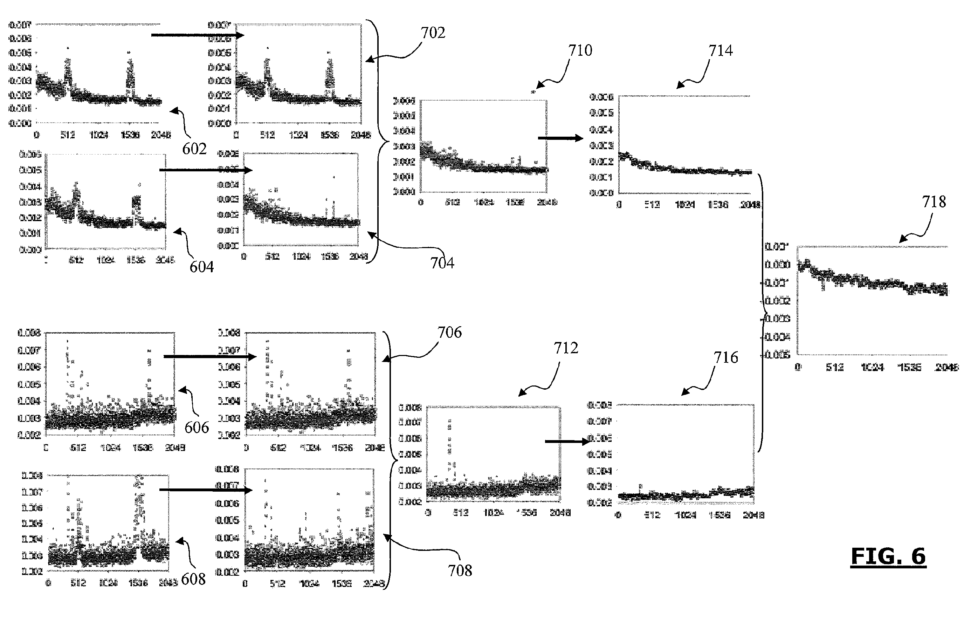

Figure 6 illustrates signal treatment on vibration signals according to the present invention, in the first and the second embodiment. Signals 602-608 are vibration signals 602-608 measured while scanning one scan line of a purple membrane patch. Signals 602-608 are first filtered to obtain filtered signals 702-708 without events that are down-hill events in retrace for each vibration type. Then, a minimum vertical deviation signal 710 and a minimum lateral deviation signal 712 are generated based on trace and retrace signals 702-708. Then, the minimum deviation signals of a predetermined number of scan lines are averaged to obtain a vertical average deviation signal 714 and a lateral average deviation signal 716.

In the first embodiment, deviation signals 714 and 716 are compared to the reference deviation signals previously measured and the applied force is corrected.

In the second embodiment, average deviation signals 714-716 are combined to obtain a signal 718 which is a smooth and quasi-linear signal related to the effectively applied force from which the setpoint of the AFM can be corrected.

Figure 7 is a schematic representation of an example of an apparatus 800 according to the invention. Both first and second embodiment described above may be realized by apparatus 800.

Apparatus 800 comprises a measuring module 802 connected to the multiple-quadrant photodiode 114. The measuring module 802 independently measures the lateral and vertical cantilever vibration for each scanning position and generates a signal for each vibration type. Thus the measuring module 802 generates 4 vibration signals:

- trace lateral cantilever vibration signal,
- retrace lateral cantilever vibration,
- trace vertical cantilever vibration signal, and
- retrace vertical cantilever vibration signal.

Theses signals are stored in storage means 804 connected to the measuring module 802.

The apparatus 800 also comprises a filter 806, eliminating in trace the events that are down-hill events in retrace for each vibration type. The filter 806 is connected to the storage means 804.

The filtered signals are entered to a minimum or average deviation module 810, determining the minimum or average lateral and vertical deviation signal for each scan line based on the filtered trace and retrace signals as mentioned above. The standard deviation of the lateral and vertical cantilever vibration signal for each line is stored in storage means 804. The force index may be calculated by an optional computation module 812 based on the average deviations and stored in storage means 804.

Based on the deviation signals in the first embodiment or the force index $FI_i$ and the reference force index $FI_R$ in the second embodiment, a control signal is generated by a control module 814. The control signal is entered to the piezoelectric stage 104.

For example, the apparatus 800 may, at least partly, be implemented in a microprocessor.

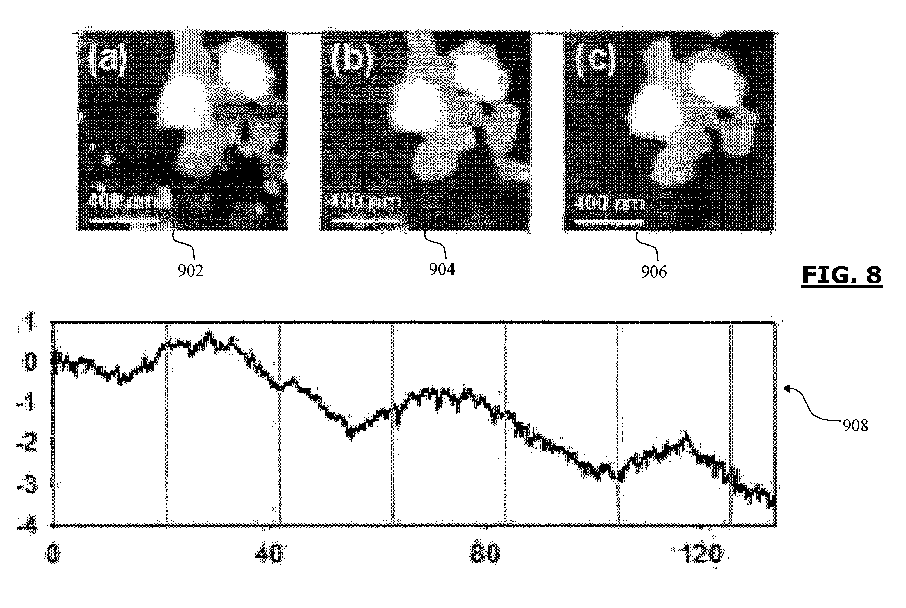

Figure 8 illustrates an example of a setpoint correction according to the invention. The setpoint correction is performed on a heterogeneous 1.2 x 1.2 $\mu$m2 zone during 130 minutes. Scanning frequency is 5hz, i.e. time for a trace/retrace cycle is 0.2 second. The predetermined number of scan lines is 5, thus correction was performed every second. The imaged zone comprises a three layer PM patch and a mica surface. The images 902, 904 and 906 are taken at different times show that the image quality is maintained in time, evolution of the sample in time is also observed. The plot 908 shows the evolution of the setpoint while imaging with the setpoint correction. Time is given by the horizontal axis of the plot 608.

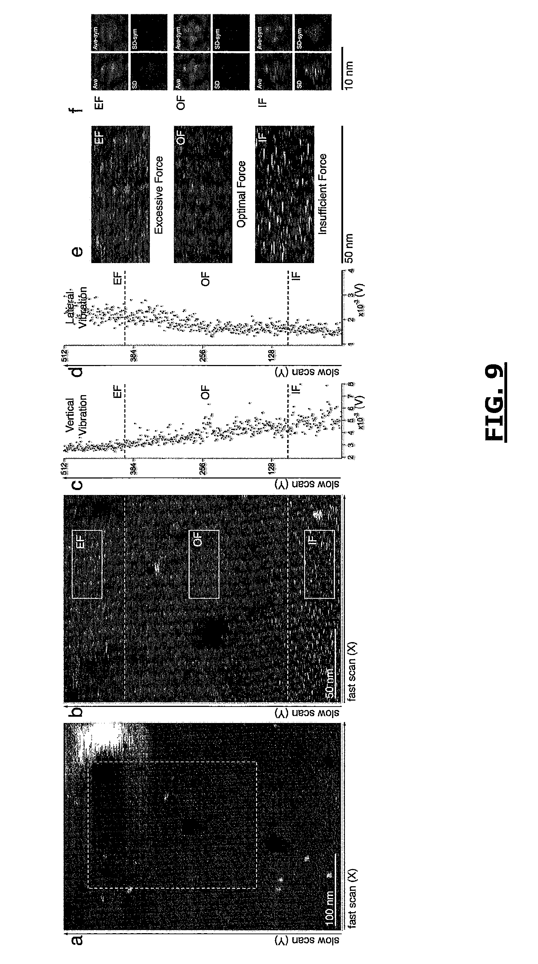

Figure 9 illustrates the influence of applied force increase due to uncontrolled drift on AFM contact mode imaging of a purple membrane (PM) patch:

- a) Medium magnification image of a bacteriorhodopsin (bR) containing PM. The trimeric structure of the extracellular bR surface is visible;
- b) High-resolution topograph recorded under uncontrolled force drift. In the beginning the image acquisition force was insufficient (IF; bottom of the image), drifted across optimal force (OF; middle of the image), and finished the scan with an excessive force (EF; top of the image);

- c) and d) Graphs displaying the change of the standard deviation of the vertical and the lateral tip vibrations per scan line as function of uncontrolled drift dependent changing loading forces;
- e) Image extracts and f) averages (left; n=14)), standard deviation (SD) maps (right; n=14), symmetrized averages and symmetrized SD-maps of the IF, OF and EF regime image regions. Full color scales: IF-average: 1.4Å < height < 9.7Å, IF-SD-map: 0.3Å < SD < 7.2Å; OF-average: 1.4Å < height < 7.9Å, OF-SD-map: 0.2Å < SD < 3.4Å; EF-average: 1.4Å < height < 9.6Å, EF-SD-map: 0.4Å < SD < 3.8Å. Internal symmetries: IF-IS-average: 0.83; IF-IS-SD-map: 0.82; OF-IS-average: 0.85; OF-IS-SD-map: 0.66; EF-IS-average: 0.75; EF-IS-SD-map: 0.65.

The presented automatic force adjustment and drift compensation procedure for contact mode AFM allows the user to let the microscope function like an imaging robot for long experiments.
It is estimated that the present invention will be of high value for time-lapse imaging studies. Furthermore, often in high-resolution AFM experiments, imaging resolution increases with experiment duration due to system equilibration. Importantly, the vibration analysis is interference independent.
The invention allows also an individual experimenter to manipulate the experimental conditions in the fluid chamber during the experiment, while the AFM maintains optimal force regime independently.

Finally, the present invention will be applicable by a large number of less-experienced AFM users and will therefore contribute to bringing the AFM towards a more general use in biology laboratories.

While the invention has been particularly shown and described mainly with reference to a preferred embodiment, it will be understood that various changes in form and detail may be made therein without departing from the spirit, and scope of the invention.

**Claims**

1. A method for automatically adjusting and compensating for the drift of a force applied by an Atomic Force Microscope (100) during contact mode scanning, said atomic force microscope (100) comprising a probe (102) scanning a surface of a sample (106), said method comprising at least one occurrence of the following steps:

   - scanning (206; 506) the surface of said sample (106) for a predetermined number of scan lines at a given frequency,
   - measuring (206;506) lateral and/or vertical vibration signal (s) ($VV_{t1}$, $LV_{t1}$) of said probe while scanning, and
   - correcting (224;524) said applied force according to said vertical and/or lateral vibration signal(s) ($VV_{t1}$, $LV_{t1}$) and reference vertical and/or reference lateral vibration signal (s) ($VV_{ref}$, $LV_{ref}$) previously defined or measured.

2. The method according to claim 1, also comprising, before the calculating step, a step of filtering (208, 508) lateral and/or vertical vibration signal(s) in order to eliminate force-unrelated signals due to surface features of said scanned surface.

3. The method according to anyone of the claims 1 or 2, wherein the measuring step (206, 506) comprises a step of measuring lateral and/or vertical vibration signal(s) for every scanning position on each scan line.

4. The method according to anyone of the preceding claims, wherein the scanning step (206;506) comprises a scanning cycle for each scan line, said scanning cycle comprising a first step of scanning said scan line in one direction and a second step of scanning said scan line in the opposite direction, the lateral and/or vertical vibration signal(s) (602-608) being measured during the first and the second scanning steps (206;506) for each scanning position of the scan line.

5. The method according to anyone of the preceding claims, further comprising, before the correction calculating step, a step calculating independently lateral and/or vertical vibration standard deviation signal(s) for each scan line.

6. The method according to claim 5, wherein the correcting step comprises the following operations:

   - comparing the measured vertical vibration standard deviation signal ($VV_{t1}$) to the reference vertical vibration standard deviation signal ($VV_{ref}$), and
   - comparing the measured lateral vibration standard deviation signal ($LV_{t1}$) to the reference lateral vibration standard deviation signal ($LV_{ref}$);
   the correction of the applied force being determined by an algorithm based on said comparisons.

7. The method according to claim 6, wherein the correction is determined by the following algorithm:

- if the measured vertical vibration standard deviation signal ($VV_{t1}$) is larger than the reference vertical vibration standard deviation signal ($VV_{ref}$), and the measured lateral vibration standard deviation signal ($LV_{t1}$) is smaller than the reference lateral vibration standard deviation signal($LV_{ref}$), then the correction is an increase of the applied force, and the measured lateral vibration standard deviation signal ($LV_{t1}$) is stored as the new reference lateral vibration standard signal,
- if the measured vertical vibration standard deviation signal ($VV_{t1}$) is smaller than the reference vertical vibration standard deviation signal($VV_{ref}$), and the measured lateral vibration standard deviation signal ($LV_{t1}$) is greater than the reference vertical vibration standard deviation signal ($LV_{ref}$), then the correction is a decrease of the applied force, and the measured vertical vibration standard deviation signal ($VV_{t1}$) is stored as the new reference vertical vibration standard deviation signal,
- if the measured vertical vibration standard deviation signal ($VV_{t1}$) is smaller than the reference vertical vibration standard deviation signal ($VV_{ref}$), and the measured lateral vibration standard deviation signal ($LV_{t1}$) is smaller than the reference lateral vibration standard deviation signal ($LV_{ref}$), then no correction of the applied force is made, and the measured vertical vibration standard deviation signal ($VV_{t1}$) is stored as the new reference vertical vibration standard signal and the measured lateral vibration standard deviation signal ($LV_{t1}$) is stored as the new reference lateral vibration standard signal; and
- if the measured vertical vibration standard deviation signal ($VV_{t1}$) is greater than the reference vertical vibration standard deviation signal ($VV_{ref}$), and the measured lateral vibration standard deviation signal ($LV_{t1}$) is greater than the reference lateral vibration standard deviation signal ($LV_{ref}$), then the correction is a decrease of the applied force.

8. The method according to claim 5, wherein the correcting step comprises the following steps:

- calculating (514) an index, called force index ($FI_i$), according to the vertical and/or lateral vibration standard deviation signal (s) ($VV_{t1}$, $VV_{t1}$), and
- comparing said force index ($FI_i$) to a reference force index ($FI_R$);
the correction of the applied force being determined by an algorithm based on said comparison.

9. The method according to claim 8, wherein the force index ($FI_i$) is calculated by subtracting the standard deviation of the vertical vibration from the standard deviation of the lateral vibration, and the correction of the applied force being determined by an algorithm based on the difference between the calculated force index ($FI_i$) and the reference force index ($FI_R$).

10. The method according to anyone of the claims 8 or 9, further comprising a starting phase (200,500) where a reference vertical vibration signal and/or a reference lateral vibration signal is/are determined.

11. The method according to anyone of the preceding claims, wherein the predetermined number of scan lines is 5.

12. The method according to anyone of the preceding claims, wherein the predetermined scanning frequency is between 4 and 6

13. A computer program comprising instructions for carrying out the steps (200-224; 500-524) of the method according to anyone of claims 1 to 12, when said computer program is executed on a computer system.

14. An apparatus (800) comprising means (802-814) adapted for carrying out the steps (200-224;500-524) of the method according to anyone of claims 1 to 12.

15. An atomic force microscope (100) comprising a computer program according to claim 13 and/or an apparatus (800) according to claim 14.

112

110

114

100

106

102

104

108

**FIG. 1**

800

810

804

812

806

802

814

**FIG. 7**

104

114

EP 2 219 035 A1

$LV_{ref}$   $VV_{ref}$

$LV_{t1}$   $LV_{t1}$

NO   Yes

CS

200
202
204
206
2060
2062
2064
2066
208
210
212
204
220
222
224
300

**FIG. 2**

| | $VV_{t1} > VV_{ref}$<br>indicates force decrease | $VV_{t1} < VV_{ref}$<br>indicates force increase |
|---|---|---|
| $LV_{t1} > LV_{ref}$<br>indicates force increase | force decrease | force decrease |
| $LV_{t1} < LV_{ref}$<br>indicates force decrease | force increase | NO force change |

308       304

302       306

300

**FIG. 3**

vertical vibration (vv)    lateral vibration (lv)

$VV'_{t1}$   $LV'_{t1}$

$VV_{ref}$   $LV_{ref}$

$VV_{t1}$   $LV_{t1}$

OF regime

vibrational noise

force

**FIG. 4**

EP 2 219 035 A1

502

506  5060  5062  5064  5066  500

508

504

510

512

$LV_{ref}$    $VV_{ref}$

514

$FI_R$

504

$FI_i$

520

522

NO    Yes

524

CS

**FIG. 5**

FIG. 6

FIG. 8

EP 2 219 035 A1

**FIG. 9**

Europäisches
Patentamt

European
Patent Office

Office européen
des brevets

# EUROPEAN SEARCH REPORT

Application Number

EP 09 30 5150

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | DE 197 28 357 A1 (MUNZ MARTIN [DE]; STURM HEINZ [DE]; SCHULZ ECKHARD DR [DE] MUNZ MARTIN) 7 January 1999 (1999-01-07) * figure 1 * * column 1, line 3 - line 37 * * column 5, line 40 - column 6, line 30 * | 1,3,5, 11-15 | INV. G01N13/16 G12B21/20 |
| A | | 2,4,6-10 | |
| X | US 5 224 376 A (ELINGS VIRGIL B [US] ET AL) 6 July 1993 (1993-07-06) * figures 1-13 * * column 4, line 4 - column 9, line 48 * | 14,15 | |
| A | | 1-13 | |
| X | SCHITTER G ET AL: "Fast contact-mode atomic force microscopy on biological specimen by model-based control" ULTRAMICROSCOPY, AMSTERDAM, NL, vol. 100, no. 3/4, 1 August 2004 (2004-08-01), pages 253-257, XP007909202 ISSN: 0304-3991 * figure 2 * * paragraphs [0001], [0002], [0004] * | 14,15 | |
| A | | 1-13 | TECHNICAL FIELDS SEARCHED (IPC) G01N G12B G01B |

The present search report has been drawn up for all claims

| Place of search | Date of completion of the search | Examiner |
|---|---|---|
| Berlin | 16 July 2009 | Polesello, Paolo |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 09 30 5150

This annex lists the patent family members relating to the patent documents cited in the above-mentioned European search report.
The members are as contained in the European Patent Office EDP file on
The European Patent Office is in no way liable for these particulars which are merely given for the purpose of information.

16-07-2009

| Patent document cited in search report | | Publication date | Patent family member(s) | | Publication date |
|---|---|---|---|---|---|
| DE 19728357 | A1 | 07-01-1999 | NONE | | |
| US 5224376 | A | 06-07-1993 | US | 5329808 A | 19-07-1994 |